# EUROPEAN PATENT APPLICATION

(11) **EP 1 914 055 A2**
(43) Date of publication of application: **23.04.2008**
(21) Application number: 07381062.4
(22) Date of filing: 11.09.2007
(51) Int. Cl.: B28B 11/18

(54) **Manufacturing procedure for ceramic tiles**

(30) Priority: 20.10.2006 ES 200602673
(71) Applicant: Maincer, S.L., 12200 Onda (ES)
(72) Inventor: Virgil Fernandez, Francisco, 12200 ONDA (ES)
(74) Representative: Esteban Perez-Serrano, Maria Isabel

(57) **Abstract**

As in any conventional manufacturing process, using the adequate raw material, ceramic tiles or pieces are obtained in a moulding procedure (1) said tiles are subjected to an enamelling and decoration stage (2) and the procedure is complemented by firing and machining said pieces. The invention is based on the fact that the machining (3) stage is carried out prior to firing (4) so that as the pieces are considerably softer than they would be if they had already been fired, rectifying and cutting and similar machines which are simpler and use less power and which additionally do not require cooling water may be used on them, thus achieving a substantial energy saving and totally eliminating the need for water consumption.

## Description

### OBJECT OF THE INVENTION

The present invention refers to a new manufacturing process for ceramic tiles of the type commonly used to cover walls and floors.

The purpose of the invention is to develop a manufacturing procedure which will make substantial savings in energy and water as well as simplifying the equipment required for the procedure.

The invention is therefore situated within the scope of the ceramic industry and more specifically in the sphere of ceramic tile manufacturing.

### BACKGROUND TO THE INVENTION

In present ceramic tile manufacturing processes having moulded the parts from clay they are then subjected to an enamelling process and decoration, following which they are fired in a kiln.

Once they have been fired in this way the pieces are machined in a process involving various cutting or polishing sections due to the hardness of the material and in order to eliminate the risk of the pieces breaking through excessively aggressive action.

The aforementioned hardness of the material means that a considerable amount of power is required by the machining elements such as the grinders or discs for making the incisions, polishing etc. while it is also necessary to use large quantities of water to cool these elements and restrict abrasion. Part of the water supplied turns into sludge when it is mixed with the dust from machining, and the subsequent removal cleaning and treatment of this residue is difficult, in addition to the fact that part of the water is absorbed by the ceramic piece, which entails an additional drying stage.

All of which requires costly equipment, high energy costs, considerable manpower and industrial complexity.

When, as a result of the production or industrial process, the firing stage of the ceramic tiles is not carried out in the same installations as the machining once the tiles have been fired they then have to be packed in boxes, subsequently unpacked for machining and repacked in slightly smaller boxes as the tile size alters following machining.

### DESCRIPTION OF THE INVENTION

The manufacturing procedure proposed by the invention resolves in a fully satisfactory manner the aforementioned problems in all the various aspects mentioned.

In order to achieve this, the procedure proposed which involves the same stages as in a conventional procedure, is specifically characterised by the fact that the machining phase is carried out immediately following the firing, and as a result the piece has not yet acquired its definitive characteristics of hardness resulting from the firing, and therefore the machining phase is much more simple in every aspect.

Specifically, the new procedure permits the use of less powerful machining devices such as rectifiers, cutters etc. which are also less technically complex thus reducing the amount of power by around 50% resulting in a considerably substantial energy saving.

As the work is carried out on the shaped but unfired piece, that is, on "soft" material the classic water cooling system is obviated and therefore the devices required for its supply are not required, namely in the water consumption and subsequent drying stage of the pieces.

The only residue generated is dust, which is simply removed by aspiration.

The means for immobilising the piece during machining are much simpler as the forces to which the piece is subjected during machining are also much lighter, due to the fact that the tile has not been fired.

During the firing phase the configuration and dimensions of the ceramic tiles or pieces remain stable however, with the particularity that machining cuts are softened during firing and are not as sharp as in conventional processes which also constitutes an added advantage.

### DESCRIPTION OF THE DRAWINGS

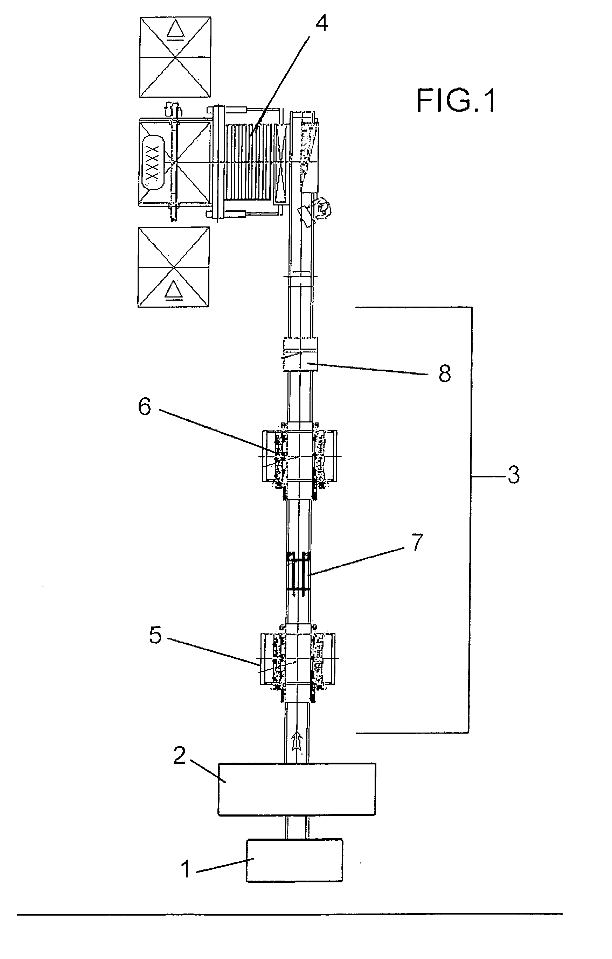

In order to complement the description and to facilitate a greater understanding of the invention characteristics, in accordance with an example of a practical embodiment a single sheet of plans is attached hereto as an integral part of the description and showing in an illustrative, but in no way restrictive manner, a single figure which has been represented in diagram form of blocks corresponding to the ceramic tile manufacturing procedure which is the object of this invention.

### PREFERRED EMBODIMENT OF THE INVENTION

As has been mentioned, the aforementioned figure has been represented in the form of a diagram corresponding to a ceramic tile manufacturing procedure, placing particular emphasis on the machining phase, the position of which in the context of the procedure and its structural characteristics are the main purpose of the invention.

Apart from the preliminary preparatory stages of the raw materials which are not relevant to the description, it may be considered that the procedure commences with a moulding stage (1) of the ceramic tiles, followed by a stage (2) of enamelling and decoration, with the particularity that following this enamelling and decoration stage (2) and contrary to conventional procedure, that is, firing of the tiles, said tiles are machined (3) beforehand, so that when the tiles are finally fired (4) they are already configured with their final dimensions.

Thus the machining (3) phase is carried out with unfired material, that is, in considerably lower conditions of hardness than in conventional techniques which permits the use of much simpler and less powerful rectifiers, cutters or similar machines, which carry out the machining in two successive stages (5)or (6) between which a 90° turning stage (7) occurs in order to machine two parallel edges of the tile and subsequently the other two, finally subjecting the pieces to a cleaning stage (8) prior to the firing (4) stage, with stage (8) carried out in a blasting chamber in order to eliminate dust and residue from the machining process.

Finally, it should be mentioned that the facility with which machining of the tiles is effected enables them to be held using two simple parallel guides which position them appropriately, instead of using complex holding mechanisms required in conventional machining when the tile has already been fired.

## Claims

1. Procedure for manufacturing ceramic tiles based on clay which is moulded to obtain the pieces or tiles which are then enamelled and decorated for subsequent firing, and which also includes a machining stage for adjusting the pieces formally and dimensionally to a pre-established model, **characterised in that** the machining (3) stage is carried out immediately following the enamelling and decoration (2) stage that is, prior to the firing (4) when the material has not yet acquired the characteristic hardness resulting from firing and is thus more easily machined.

2. Ceramic tile manufacturing procedure according to claim 1, **characterised in that** the machining phase prior to firing is established in two successive machining stages (5-6) in between which there is a 90° turning stage (7) of the tiles and finally a cleaning (8) stage takes place for removing residue generated by the machining process.
